# EUROPÄISCHE PATENTSCHRIFT

(11) **EP 2 748 506 B1**
(45) Veröffentlichungstag und Bekanntmachung des Hinweises auf die Patenterteilung: **08.06.2016**
(21) Anmeldenummer: 12750382.9
(22) Anmeldetag: 23.08.2012
(51) Int. Cl.: F16L 27/02

(54) **ANORDNUNG ZUR FLUIDISCHEN UND MECHANISCHEN VERBINDUNG VON ZWEI BAUTEILEN**
ARRANGEMENT FOR THE FLUIDIC AND MECHANICAL CONNECTION OF TWO COMPONENTS
ENSEMBLE DESTINÉ À LA LIAISON FLUIDIQUE ET MECANIQUE DE DEUX ÉLÉMENTS

(30) Priorität: 25.08.2011 DE 102011081578
(43) Veröffentlichungstag der Anmeldung: 02.07.2014
(73) Patentinhaber: Mahle International GmbH, 70376 Stuttgart (DE); Ford-Werke GmbH, 50735 Köln (DE)
(72) Erfinder: KAISER, Sven, Alexander, 71364 Winnenden (DE); KUSKE, Andreas, NL-6243 CM Geulle (NL); PRÖTTEL, Thomas, 73728 Esslingen (DE); RÖTTGER, Daniel, B-4731 Eynatten (BE); SOMMERHOFF, Franz, Arnd, 52066 Aachen (DE); VIGILD, Christian, 52457 Aldenhoven (DE)
(74) Vertreter: BRP Renaud & Partner mbB Rechtsanwälte Patentanwälte Steuerberater
(86) Internationale Anmeldenummer: PCT/EP2012/066383
(87) Internationale Veröffentlichungsnummer: WO 2013/026894

(56) Entgegenhaltungen:
- EP-A1- 0 647 779
- DE-A1- 2 455 065
- DE-A1- 3 932 300
- DE-U1- 9 205 401
- US-A- 2 998 270

## Beschreibung

Die vorliegende Erfindung betrifft eine Anordnung zur fluidischen und mechanischen Verbindung von zwei Bauteilen wie z.B. in EP 0647779 offenbart. Die Erfindung betrifft weiter eine Kupplung für eine derartige Anordnung.

Zur fluidischen Verbindung von zwei Bauteilen wird oft eine Kupplung verwendet. Dabei geht mit der fluidischen Verbindung in der Regel auch eine mechanische Verbindung einher. Die Kupplung weist üblicherweise zwei Kupplungsteile auf, die jeweils mit einem der Bauteile fluidisch und mechanisch verbunden sind. Die jeweiligen Kupplungsteile können dabei unterschiedliche Formen und Größen aufweisen, womit unterschiedlich ausgebildete Bauteile fluidisch und mechanisch miteinander verbunden werden können. Eine fluidische Verbindung zwischen den Bauteilen ist dadurch gewährleistet, dass auch die beiden Kupplungsteile fluidisch und mechanisch miteinander verbunden sind. Insbesondere um die Überträgung von mechanischen Schwingungen des einen Bauteils auf das andere Bauteil zu verhindern bzw. zu reduzieren, kann die Kupplung grundsätzlich mit einem Dämpfungsteil ausgestattet sein. Das Dämpfungsteil ist dabei axial von beiden Kupplungsteilen beabstandet angeordnet und mit diesen verbunden, so dass mechanische Schwingungen des jeweiligen Bauteils, die auch auf das zugehörige Kupplungsteil übertragen werden, gedämpft werden und somit nicht auf das andere Kupplungsteil bzw. auf das andere Bauteil übertragen werden. Eine derartige Anordnung benötigt jedoch einen entsprechenden Raum zur fluidischen und mechanischen Verbindung zwischen den Bauteilen. Bei vielen Anwendungen derartiger Anordnungen, beispielsweise in Fahrzeugen, ist jedoch ein reduzierter Raumbedarf derartiger Anordnungen erwünscht.

Die vorliegende Erfindung beschäftigt sich mit dem Problem, für eine Anordnung zur fluidischen und mechanischen Verbindung von zwei Bauteilen, eine verbesserte oder zumindest alternative Ausführungsform anzugeben, die sich insbesondere durch eine vereinfachte Montage und/oder einen platzsparenden Aufbau auszeichnet.

Die vorliegende Erfindung beruht auf dem allgemeinen Gedanken, ein Dämpfungsteil in der Umfangsrichtung um ein einfach montierbares bzw. demontierbares Kupplungsteil einer Kupplung einer Anordnung zur fluidischen und mechanischen Verbindung von zwei Bauteilen herum anzuordnen und die Anordnung somit platzsparender zu gestalten. Die Kupplung weist dabei zwei Kupplungsteile auf, die koaxial gesteckt sind und jeweils fluidisch und mechanisch mit einem der Bauteile verbunden sind. Das Dämpfungsteil dient insbesondere dem Zweck, die Übertragung von mechanischen Schwingungen eines der Bauteile auf das andere Bauteil zu verhindern oder zumindest zu vermindern. Hierbei ist zwischen dem Dämpfungsteil und der Kupplung, insbesondere zwischen dem Dämpfungsteil und einem der Kupplungsteile, ein axialer Überdeckungsbereich gebildet. Innerhalb dieses Überdeckungsbereiches, welcher zusätzlich zu einem Verbindungsbereich des Dämpfungsteils mit dem Kupplungsteil vorgesehen ist, verlaufen das Dämpfungsteil und das Kupplungsteil vorzugsweise achsparallel, insbesondere koaxial. Eines der Kupplungsteile ist also koaxial in das andere Kupplungsteil, gesteckt, womit die beiden Kupplungsteile der Kupplung, fluidisch and mechanisch miteinander verbunden sind. Erfindungsgemäß verbindet das Dämpfungsteil das äußere Kupplungsteil mit dem zugehörigen, vom inneren Kupplungsteil abgewandten, Bauteil. Die mechanische Verbindung zwischen dem Dämpfungsteil und dem damit verbundenen Kupplungsteil ist insbesondere im Verbindungsbereich realisiert. Der Überdeckungsbereich ist an einer vom anderen Bauteil abgewandten Seite dieses Kupplungsteils angeordnet, innerhalb dessen das Dämpfungsteil das damit verbundene Kupplungsteil zumindest in einem Abschnitt axial überdeckt. Hierbei kann die gesamte axiale Länge des Dämpfungsteils länger, kürzer oder gleich lang sein als die axiale Länge des überdeckten Kupplungsteils. Insbesondere kann der Überdeckungsbereich auch das andere koaxial gesteckte Kupplungsteil zumindest teilweise axial überdecken. Zudem kann der Überdeckungsbereich axial von dem besagten Verbindungsbereich begrenzt sein.

Bei der erfindungsgemäßen Anordnung ist es also insbesondere möglich, das äußere Kupplungsteil ausschließlich mittels des Dämpfungsteils mit dem zugehörigen Bauteil zu verbinden.

Dem Erfindungsgedanken entsprechend weist die Anordnung die beiden Kupplungsteile auf, wobei eines der Kupplungsteile am ersten Bauteil angeordnet ist. Um die Beschreibung im Folgenden verständlicher zu gestalten, wird nachstehend zwischen einem ersten Kupplungsteil und einem zweiten Kupplungsteil unterschieden. Es versteht sich jedoch, dass das erste Kupplungsteil und das zweite Kupplungsteil mit den im Folgenden genannten Eigenschaften vertauschbar sind, ohne den Rahmen dieser Erfindung zu verlassen. Das erste Kupplungsteil ist nun also am ersten Bauteil angeordnet und insbesondere fluidisch und mechanisch damit verbunden. Das mit dem ersten Kupplungsteil gesteckte zweite Kupplungsteil ist weiter zumindest teilweise von dem Dämpfungsteil axial überdeckt und somit in der Umfangsrichtung umschlossen, wobei das zweite Kupplungsteil mit dem Dämpfungsteil fluiddicht, insbesondere stoffschlüssig, kraftschlüssig oder mechanisch verbunden ist. Somit überdeckt das Dämpfungsteil das zweite Kupplungsteil axial im Überdeckungsbereich, wobei der Überdeckungsbereich axial auf der dem ersten Bauteil zugewandten Seite vom Verbindungsbereich begrenzt ist, in dem die mechanische Verbindung zwischen dem zweiten Kupplungsteil und dem Dämpfungsteil realisiert ist. Zudem sind das Dämpfungsteil und das zweite Kupplungsteil insbesondere im Überdeckungsbereich bevorzugt achsparallel, vorzugsweise koaxial, angeordnet. Das Dämpfungsteil verbindet also das zweite Kupplungsteil beweglich mit dem zweiten Bauteil. Das heißt insbesondere, dass das zweite Kupplungsteil relativ zum zweiten Bauteil beweglich ist, wobei die mechanische Verbindung des zweiten Kupplungsteils bzw. der Kupplung mit dem zweiten Bauteil mittels des Dämpfungsteils realisiert ist.. Das Dämpfungsteil ist nun erfindungsgemäß derart ausgebildet, dass es die Übertragung von mechanischen Schwingungen des einen Bauteils auf das andere Bauteil verhindert oder zumindest vermindert. Das Dämpfungsteil kann hierzu beispielsweise federnd oder elastisch ausgebildet sein, wobei die mechanischen Schwingungen des einen Bauteils durch die federnde Eigenschaft des Dämpfungsteils ausgeglichen werden. Beim Federn des Dämpfungsteils wird dabei die kinetische Energie der Schwingungen etwa in Wärme bzw. in die Verformung des Dämpfungsteils umgewandelt, wodurch die Schwingung gedämpft wird. Die Verhinderung bzw. Reduzierung der Schwingungsübertragung des zweiten Bauteils auf das erste Bauteil ist hierbei dadurch realisiert, dass das Dämpfungsteil mit dem zweiten Bauteil verbunden ist und die mechanischen Schwingungen dieses Bauteils dämpft. Zudem ist das Dämpfungsteil über das mit dem ersten Kupplungsteil gesteckten zweiten Kupplungsteil mit dem ersten Bauteil verbunden und kann die Schwingungen des ersten Bauteils dämpfen. Dadurch ist die Übertragung der Schwingungen des ersten Bauteils auf das zweite Bauteil verhindert oder zumindest reduziert. Das Dämpfungsteil dient folglich insbesondere dem Zweck Schwingungen der jeweiligen Bauteile, beispielsweise durch die federnde bzw. elastische Eigenschaft, zu dämpfen. Die Umschließung des zweiten Kupplungsteils durch das Dämpfungssteil bedeutet dabei nicht zwingend, dass das Dämpfungsteil das zweite Kupplungsteil entlang des gesamten Umfangs umgibt. Eine derartige Umschließung entlang des gesamten Umfangs des zweiten Kupplungsteils ist jedoch bevorzugt.

Die erfindungsgemäße Anordnung dient der fluidischen und mechanischen Verbindung von zwei beliebigen Bauteilen. Als Beispiele für derartige Bauteile bzw. Verbindungen sei hier auf Anwendungen im Fahrzeugbereich hingewiesen. Die Anordnung kann also insbesondere der fluidischen und mechanischen Verbindung von Luftleitungen, insbesondere Reinluftleitungen, Rohluftleitungen sowie Ladeluftleitungen dienen. Die entsprechenden Bauteile sind also beispielsweise Rohre, Gehäuse, Dosen, Behälter sowie Umlenker. Entsprechend kann zumindest eines der Kupplungsteile als ein Stutzen ausgebildet sein, der an einem der Bauteile, beispielsweise an einer Rohr- oder Schlauchleitung, angeordnet und damit verbunden ist.

Gemäß einer bevorzugten Ausführungsform ist das Dämpfungsteil als ein Faltenbalg ausgebildet. Das als Faltenbalg ausgebildete Dämpfungsteil weist insbesondere eine elastische Eigenschaft auf und ist vorzugsweise aus einem Kunststoff hergestellt. Dabei kann der Faltenbalg insbesondere axial federn. Zudem umschließt der Faltenbalg das zweite Kupplungsteil entlang des gesamten Umfangs. Der Faltenbalg ist zweckmäßig einerseits innerhalb des Verbindungsbereichs mit dem zweiten Kupplungsteil und andererseits innerhalb eines Anschlussabschnittes mit dem zweiten Bauteil mechanisch verbunden, wobei er das zweite Kupplungsteil zwischen dem Verbindungsbereich und dem Anschlussabschnitt im Überdeckungsbereich axial überdeckt. Die mechanische Verbindung zwischen dem zweiten Kupplungsteil und dem Faltenbalg kann beispielsweise dadurch realisiert sein, dass das zweite Kupplungsteil im Verbindungsbereich eine in Umfangsrichtung verlaufende Schulter aufweist, auf der der Faltenbalg angeordnet ist und in die der Faltenbalg axial eindringen kann. Der Faltenbalg kann eine beliebige Anzahl von Falten aufweisen, wobei der Faltenbalg vorzugsweise eine einzelne derartige Falte aufweist, um insbesondere die platzsparende Eigenschaft der Anordnung zu verbessern. Zudem ist die zumindest eine Falte des Faltenbalgs bevorzugt im Überdeckungsbereich angeordnet bzw. bildet den Überdeckungsbereich.

Bevorzugt ist eine Ausführungsform, bei der die Kupplungsteile sowie das Dämpfungsteil symmetrisch, insbesondere rotationssymmetrisch ausgebildet sind. Eine derartige Ausbildung vereinfacht insbesondere eine entsprechende Montage der Anordnung.

Entsprechend einer weiteren bevorzugten Ausführungsform weist das zweite Kupplungsteil einen dem zweiten Bauteil zugewandten Endabschnitt auf, wobei der Endabschnitt freistehend in das zweite Bauteil hineinragt. Der Endabschnitt begrenzt einen Überdeckungsabschnitt des zweiten Kupplungsteils an der axial vom ersten Bauteil abgewandten Seite. Der Überdeckungsabschnitt bezeichnet einen Abschnitt des zweiten Kupplungsteils, der im Überdeckungsbereich vom Dämpfungsteil überdeckt ist. Der dem zweiten Bauteil zugewandte Endabschnitt des zweiten Kupplungsteils ist also im Inneren des zweiten Bauteils bzw. eines entsprechenden Abschnitts des zweiten Bauteils, angeordnet, wobei die Anordnung des Endabschnitts im zweiten Bauteil kontaktlos erfolgt. Der Endabschnitt und somit das zweite Kupplungsteil sind folglich relativ zum zweiten Bauteil beweglich. Dementsprechend ist insbesondere die Übertragung von Schwingungen des zweiten Bauteils auf das mit dem ersten Kupplungsteil gesteckten zweiten Kupplungsteils verhindert, womit auch die Übertragung der entsprechenden Schwingungen vom zweiten Bauteil auf das erste Bauteil verhindert ist. Entsprechendes gilt für die Übertragung von Schwingungen des ersten Bauteils auf das zweite Bauteil. Das Dämpfungsteils kann dabei zusätzlich eine fluidische Dichtigkeit der Anordnung im Überdeckungsbereich und/oder im Verbindungsbereich und/oder im Anschlussabschnitt gewährleisten. Das Dämpfungsteil überdeckt das zweite Kupplungsteil axial entlang des Überdeckungsbereichs und umschließt somit den Überdeckungsabschnitt des zweiten Kupplungsteils vorzugsweise entlang des gesamten Umfangs. Zudem ist das Dämpfungsteil mit dem zweiten Bauteil und dem zweiten Kupplungsteil im Verbindungsbereich und im Anschlussabschnitt mechanisch derart verbunden, dass ein Entweichen eines entsprechenden Fluids unterbunden ist.

Dabei ist das Dämpfungsteil bei bevorzugten Ausführungsformen durch eine Schelle mit dem zweiten Bauteil verbunden. Weist das zweite Bauteil bzw. der entsprechende Abschnitt des zweiten Bauteils eine rotationssymmetrische Form auf, so ist die Schelle also insbesondere ringförmig ausgebildet. Auch sind Ausführungsformen vorstellbar, bei denen das Dämpfungsteil und das zweite Bauteil stoffschlüssig miteinander verbunden, insbesondere verschweißt bzw. verklebt sind. Die jeweilige Verbindung ist hierbei zweckmäßig im Anschlussabschnitt realisiert.

Die freistehende Anordnung des Endabschnitts des zweiten Kupplungsteil im zweiten Bauteil ist bei einer bevorzugten Ausführungsform derart realisiert, dass der Endabschnitt radial vom zweiten Bauteil bzw. vom entsprechenden Abschnitt des zweiten Bauteils beabstandet ist. Weisen der Endabschnitt und der entsprechende Abschnitt des zweiten Bauteils beispielsweise eine rotationssymmetrische Form, insbesondere die Form eines Hohlzylinders, auf, so ist ein Außendurchmesser des Endabschnitts kleiner als ein Innendurchmesser des entsprechenden Abschnittes des zweiten Bauteils.

Bei einer vorteilhaften Ausführungsform weist das erste Kupplungsteil und/oder das zweite Kupplungsteil, zumindest in einem Abschnitt, eine tulpenartige Form auf. Die tulpenartige Form dient dabei insbesondere dem Zweck, ein Strömungsverhalten des entsprechenden Fluids durch die Anordnung zu verbessern. Strömt das Fluid zum Beispiel vom zweiten Bauteil zum ersten Bauteil, so ist insbesondere der angeströmte Endabschnitt des zweiten Kupplungsteils tulpenartig ausgebildet. Der Endabschnitt des zweiten Kupplungsteils ist also insbesondere als Einströmtulpe ausgebildet, die vorzugsweise freistehend in das zweite Bauteil hineinragt. Entsprechendes gilt, wenn das Fluid vom ersten Bauteil zum zweiten Bauteil strömt. In diesem Fall ist insbesondere ein dem ersten Bauteil zugewandter Abschnitt des ersten Kupplungsteils tulpenartig ausgebildet. Insbesondere ist die tulpenförmige Ausbildung im Anschlussabschnitt angeordnet.

Bevorzugt ist auch eine Ausführungsform, bei der die Kupplung in ihrem Inneren ein Steuerelement aufweist. Das Steuerelement dient dabei insbesondere dem Zweck, die Strömung des entsprechenden Fluids zu steuern. Das Steuerelement kann insbesondere als eine Drosselklappe ausgebildet sein. Vorstellbar sind jedoch auch Ausführungsformen, bei denen das Steuerelement als Ventil ausgebildet ist. Das Steuerelement ist zudem vorzugsweise in einem der Kupplungsteile angeordnet. Das heißt insbesondere, dass das erste Kupplungsteil und/oder das zweite Kupplungsteil ein derartiges Steuerelement aufweist. Ist eines der Kupplungsteile als Stutzen ausgebildet und weist ein derartiges Steuerelement auf, so kann das Kupplungsteil insbesondere als Drosselklappenstutzen bzw. als Ventilstutzen ausgebildet sein. Derartige Kupplungsteile kommen dabei beispielsweise bei derartigen Anordnungen für Ladeeinrichtungen, insbesondere für Turbolader, zum Einsatz.

Wie bereits erwähnt, sind das erste Kupplungsteil und das zweite Kupplungsteil koaxial gesteckt. Gemäß einer bevorzugten Ausführungsform ist die Verbindung zwischen den Kupplungsteilen mittels eines ringförmigen Riegelelements gewährleistet. Das Riegelelement ist dabei radial zwischen den Kupplungsteilen angeordnet. Hierzu greift das Riegelelement vorzugsweise einerseits in eine Innennut des einen Kupplungsteils und andererseits in eine radial dazu fluchtende Außennut des anderen Kupplungsteils ein, wobei das die Außennut aufweisende Kupplungsteil zweckmäßig in das die Innennut aufweisende Kupplungsteil gesteckt ist. Die ringförmige Ausbildung des Riegelelements bezieht sich dabei lediglich auf einen Zustand, bei dem das Riegelelement in der entsprechenden Nut bzw. in den Nuten angeordnet ist. Die Kupplungsteile weisen also entsprechend in den die Nut aufweisenden Bereichen eine kreisförmige Form auf. Das Riegelelement kann insbesondere durch die Anwendung einer entsprechenden mechanischen Kraft aus den Nuten gezogen werden, womit die Verbindung zwischen den Kupplungsteilen gelöst wird. Bevorzugt ist dabei eine Ausführungsform, bei der das Riegelelement durch eine radiale Öffnung des außenliegenden Kupplungsteils in die entsprechende Nut, das heißt also in die Innennut, einführbar und ausführbar ist. Das Kupplungsteil, in welches das andere Kupplungsteil gesteckt ist, weist also die radiale Öffnung auf, in die das Riegelelement eingeführt und ausgeführt werden kann. Dabei ist das Riegelelement derart in der Innennut eingeführt bzw. angeordnet, dass es einen Steckvorgang der Kupplungsteile ermöglicht. Das Riegelelement kann dabei insbesondere derart ausgebildet und/oder angeordnet sein, dass es am äußeren Kupplungsteil vormontierbar ist und beim Steckvorgang federelastisch nachgibt und in die Außennut einrastet und so die Kupplungsteile verriegelt. Hierzu kann das eingesteckte Kupplungsteil eine entsprechende Außenkontur aufweisen. Die entsprechenden Nuten sind weiter bevorzugt in einem Befestigungsabschnitt des zweiten Kupplungsteils realisiert, der vorzugsweise an einem dem ersten Kupplungsteil zugewandten Ende des zweiten Kupplungsteils angeordnet ist und somit den Überdeckungsabschnitt axial begrenzt.

Bevorzugt ist weiter eine Ausführungsform, bei der das Dämpfungsteil das zweite Kupplungsteil konzentrisch umschließt. Das heißt insbesondere, dass das Dämpfungsteil und das zweite Kupplungsteil eine gemeinsame Längsmittelachse aufweisen. Hierzu sind das Dämpfungsteil und das zweite Kupplungsteil vorzugsweise rotationssymmetrisch ausgebildet. Zweckmäßig ist dann auch das zweite Bauteil, bzw. der entsprechende Abschnitt des zweiten Bauteils, rotationssymmetrisch ausgebildet und in einem kraft- und schwingungsfreien Zustand ebenfalls konzentrisch zum zweiten Kupplungsteil und dem Dämpfungsteil angeordnet.

Um eine Dichtigkeit der Kupplung zu gewährleisten, ist bei einer weiteren bevorzugten Ausführungsform zumindest ein Dichtungselement, beispielsweise ein O-Ring, radial zwischen den Kupplungsteilen angeordnet. Sind die Kupplungsteile also rotationssymmetrisch ausgebildet, so kann das Dichtungselement beispielsweise ringförmig ausgebildet sein. Weiter kann das Dichtungselement zumindest teilweise in entsprechenden Ausnehmungen in der Außenkontur bzw. Innenkontur der Kupplungsteile angeordnet sein. Das heißt also insbesondere, dass das eingesteckte Kupplungsteil eine derartige Ausdehnung in der Außenkontur aufweist, während das andere Kupplungsteil eine derartige und zugehörige Außennehmung in der Innenkontur aufweist, wobei das Dichtungselement in beiden Ausnehmungen angeordnet ist. Für eine zweckmäßige Dichtigkeit durch das Dichtungselement ist es jedoch auch ausreichend, wenn lediglich eines der Kupplungsteile eine derartige Ausnehmung aufweist. Die Ausnehmung des zweiten Kupplungsteils kann im Überdeckungsabschnitt oder im Befestigungsabschnitt angeordnet sein.

Bei einer weiteren Ausführungsform sind das zweite Kupplungsteil und das Dämpfungsteil einstückig ausgebildet. Das heißt also insbesondere, dass das zweite Kupplungsteil und das Dämpfungsteil aus einem Kunststoff hergestellt sein können, wobei das zweite Kupplungsteil und das Dämpfungsteil zusammen durch ein Spritzverfahren hergestellt sind. Bei dieser Ausführungsform ist das Dämpfungsteil folglich Bestandteil der Kupplung. Alternativ können das zweite Bauteil und das Dämpfungsteil einstückig ausgebildet sein. Das zweite Bauteil, insbesondere der entsprechende Abschnitt des zweiten Bauteils, und das Dämpfungsteil können also insbesondere aus Kunststoff hergestellt sein. Bei dieser Ausführungsform ist das Dämpfungsteil damit Bestandteil des zweiten Bauteils.

Es sei darauf hingewiesen, dass die Kupplung der Anordnung zur mechanischen und fluidischen Verbindung der Bauteile, insbesondere bei einer einstückigen Ausbildung mit dem Dämpfungste il, als wichtiger Bestandteil der Erfindung, auch als Solche zum Umfang dieser Erfindung gehört.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine isometrische Ansicht einer Anordnung,
- Fig. 2: eine isometrische Ansicht der Anordnung bei ungestecktem Zustand,
- Fig. 3: einen Axialschnitt durch die Anordnung.

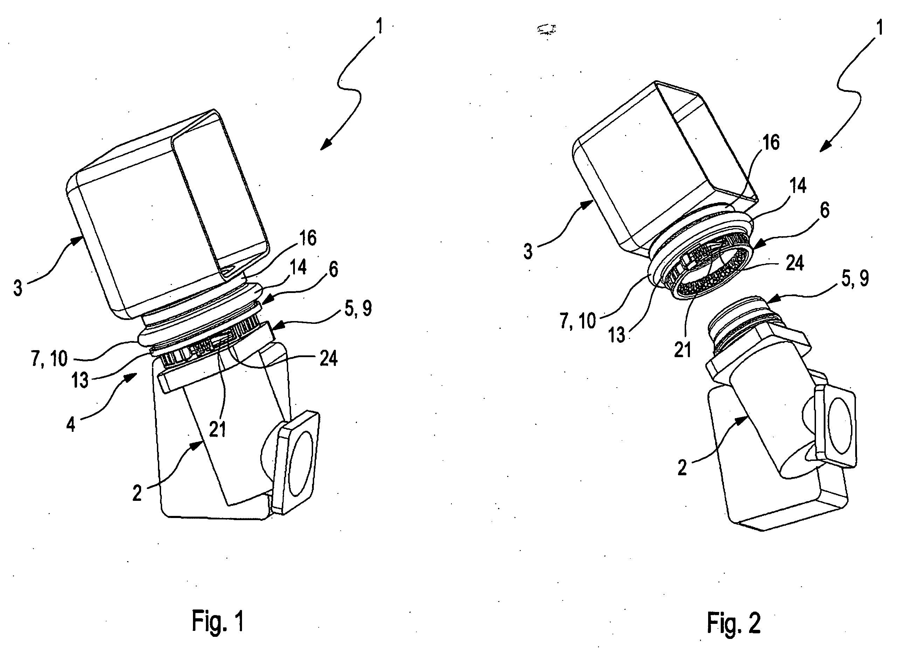

Die Fig. 1 bis 3 zeigen eine Anordnung 1 zur fluidischen und mechanischen Verbindung von zwei Bauteilen 2,' 3 mittels einer Kupplung 4. Das erste Bauteil 2 ist dabei als eine Leitung 2 ausgebildet, während das zweite Bauteil 3 als ein Behälter oder Gehäuse 3, beispielsweise eines Luftfilters, ausgebildet ist. Entsprechend dient die fluidische und mechanische Verbindung des ersten Bauteils 2 mit dem zweiten Bauteil 3 mittels der Kupplung 4 dem Transport eines Gases als Fluid. Die Anordnung 1 weist erfindungsgemäß zwei Kupplungsteile 5, 6 der Kupplung 4 sowie ein Dämpfungsteil 7 auf. Die beiden Kupplungsteile 5, 6 sind rotationssymmetrisch ausgebildet und koaxial gesteckt. Das heißt bei der gezeigten Ausführungsform, dass das erste Kupplungsteil 5 in das zweite Kupplungsteil 6 gesteckt ist, wobei beide Kupplungsteile 5, 6 eine gemeinsame Längsmittelachse 8 aufweisen. Wie in der Fig. 2 gezeigt, sind die beiden Kupplungsteile 5, 6 zudem ineinander steckbar. Das erste Kupplungsteil 5 ist in der gezeigten Ausführungsform als ein Stutzen 9 ausgebildet und am ersten Bauteil 2 angeordnet und damit verbunden. Das zweite Kupplungsteil 5 ist also insbesondere als der Stutzen 9 des ersten Bauteils 2 ausgebildet. Das erste Kupplungsteil 5 weist in seinem Inneren zudem die Form eines Hohlzylinders auf und ist somit fluidisch mit dem ersten Bauteil 2 verbunden.

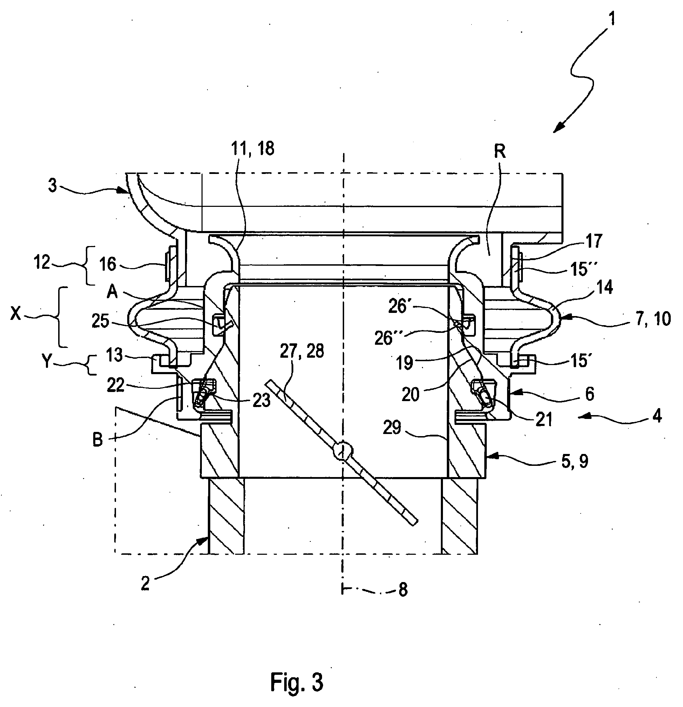

Das Dämpfungsteil 7 ist bei der gezeigten Ausführungsform als ein Faltenbalg 10 ausgebildet. Das als Faltenbalg 10 ausgebildete Dämpfungsteil 7 verbindet erfindungsgemäß das zweite Kupplungsteil 6 beweglich mit dem zweiten Bauteil 3 und ist koaxial zu diesen angeordnet. Das heißt, dass das zweite Kupplungsteil 6 relativ zum zweiten Bauteil 3 beweglich ist. Somit ist das zweite Kupplungsteil 6 ausschließlich über das Dämpfungsteil 7 mit dem zweiten Bauteil 3 verbunden. Das zweite Kupplungsteil 6 weist, wie in Fig. 3 gezeigt, an einem dem zweiten Bauteil 3 zugewandten Endabschnitt 11 eine tulpenartige Form auf. Dabei ragt der Endabschnitt 11 des zweiten Kupplungsteils 6 in das zweite Bauteil 3, insbesondere in einem entsprechenden Anschlussabschnitt 12 des zweiten Bauteils 3, hinein und ist freistehend darin angeordnet. Der Endabschnitt 11 des zweiten Kupplungsteils 6 ist also innerhalb des Anschlussabschnitts 12 des zweiten Bauteils 3 angeordnet, wobei der Endabschnitt 11 radial vom Anschlussabschnitt 12 beabstandet ist. Die Verbindung zwischen dem zweiten Kupplungsteil 6 und dem zweiten Bauteil 3 ist mittels des Dämpfungsteils 7 gewährleistet. Hierzu umschließt das Dämpfungsteil 7 das zweite Bauteil im Anschlussabschnitt 12 konzentrisch und somit entlang des gesamten Umfangs des zweiten Kupplungsteils 6. Das Dämpfungsteil 7 ist nun einerseits mit dem zweiten Kupplungsteil 6 verbunden und andererseits mit dem zweiten Bauteil 3 verbunden. Zur Verbindung mit dem Dämpfungsteil 7 weist das zweite Kupplungsteil 6 in einem Verbindungsbereich Y eine radial über die gesamte Umfangsrichtung verlaufende Schulter 13 auf. Das als Faltenbalg 10 ausgebildete Dämpfungsteil 7 weist dabei eine einzelne Falte 14 auf, von der in axialer Richtung jeweils ein Befestigungsabschnitt 15 absteht. Eines der Befestigungsabschnitte 15' des Dämpfungsteils 7 ist im Verbindungsbereich Y auf der Schulter 13 des zweiten Dämpfungsteils 6 angeordnet und ragt axial in die Schulter 13 hinein und verbindet somit das Dämpfungsteil 7 mit dem zweiten Kupplungsteil 6. Der andere Verbindungsabschnitt 15" umschließt das zweite Bauteil 3 im Anschlussabschnitt 12 radial entlang des gesamten Umfangs. Eine Verbindung zwischen dem zweiten Befestigungsabschnitt 15" und dem Anschlussabschnitt 12 und somit zwischen dem Dämpfungsteil 7 und dem zweiten Bauteil 3 ist dabei über eine Schelle 16 realisiert, die ringförmig ausgebildet ist und den zweiten Verbindungsabschnitt 15" des Dämpfungsteils 7 gegen eine Außenseite 17 des Anschlussabschnittes 12 des zweiten Bauteils 3 andrückt. Hierdurch ist ein Überdeckungsbereich X gegeben, der das zweite Kupplungsteil 6 axial entlang eines Überdeckungsabschnittes A des zweiten Kupplungsteils 6, der auf der dem zweiten Bauteil 3 zugewandten Seite axial von dem tulpenartigen Endabschnitt 11 begrenzt ist und auf der dem ersten Bauteil 2 zugewandten Seite axial von einem Befestigungsabschnitt B, in dem die Verbindung zwischen den Kupplungsteilen 5, 6 realisiert ist, begrenzt ist, überdeckt.

Zudem entsteht ein Ringraum R, der fluidisch mit dem zweiten Bauteil 3 verbunden ist und sich axial zwischen dem Endabschnitt 11 und der Schulter 13 erstreckt. Weiter ist einerseits die mittels der Kupplung 4 hergestellte fluidische Verbindung zwischen den Bauteilen 2, 3 dicht. Andererseits ist durch die elastische bzw. federnde Eigenschaft des als Faltenbalg 10 ausgebildeten Dämpfungsteils 7, die Übertragung von mechanischen Schwingungen von eines der Bauteile 2, 3 auf das andere Bauteil 2, 3 verhindert oder zumindest reduziert. So führen mechanische Schwingungen des zweiten Bauteils 3 zu einer elastischen Verformung des Dämpfungsteils 7 und somit zu einem entsprechenden Abbau der kinetischen Energie der Schwingungen, womit eine Übertragung auf das zweite Kupplungsteil 6 und das damit gesteckte erste Kupplungsteil 5 und folglich auf das erste Bauteil 2 verhindert oder zumindest reduziert ist. Entsprechend führen Schwingungen des ersten Bauteils 2 zu Schwingungen des ersten Kupplungsteils 5 und somit des damit gesteckten zweiten Kupplungsteils 6, was wiederum zu einer elastischen Verformung des Dämpfungsteils 7 führt, womit eine Übertragung auf das zweite Bauteil 3 verhindert oder zumindest reduziert ist. Die Anordnung 1 führt zudem, insbesondere durch die Anordnung des Dämpfungsteils 7, zu einem reduzierten Platzbedarf, was bei vielen Anwendungsbereichen derartiger Anordnungen 1, beispielsweise in Kraftfahrzeugen, erwünscht ist. Weiter können das zweite Kupplungsteil 6 und das Dämpfungsteil 7 einteilig bzw. einstückig ausgebildet sein. Das zweite Kupplungsteil 6 und das Dämpfungsteil 7 können also beispielsweise aus einem Kunststoff durch ein Spritzverfahren hergestellt sein. Dies führt insbesondere zu einer kostengünstigen Herstellung der Anordnung. Alternativ können das zweite Bauteil 3, insbesondere der Anschlussabschnitt 12 des zweiten Bauteils 3, und das Dämpfungsteil 7 einstückig ausgebildet sein.

Die tulpenartige Ausbildung des Endabschnitts 11 des zweiten Kupplungsteils 6 dient insbesondere dem Zweck, das Strömungsverhalten des Fluids zu verbessern. Dabei kann das Fluid vom zweiten Bauteil 3 zum ersten Bauteil 2 strömen. Der Endabschnitt 11 des zweiten Kupplungsteils 6 ist dann insbesondere als eine Einströmtulpe 18 ausgebildet. Bei anderen Ausführungsformen kann die Durchströmungsrichtung umgekehrt sein. Der tuplenartige Endabschnitt 11 bildet dann einen Ausströmbereich, wobei das Fluid einen sanften Übergang in das Volumen des zweiten Bauteils 3 erfährt. Der tulpenartige Endabschnitt 11 endet, wie in Fig. 3 gezeigt, bevorzugt in dem axialen Bereich, in dem das große Volumen des zweiten Bauteils 3 beginnt.

Wie bereits erwähnt ist das erste Kupplungsteil 5 in das zweite Kupplungsteil 6 einsteckbar. Hierzu weist eine Außenkontur 19 des ersten Kupplungsteil 5 eine zu einer Innenkontur 20 des zweiten Kupplungsteils 6 komplementäre Form auf. Um eine Verbindung zwischen den Kupplungsteilen 5, 6 zu gewährleisten ist eine Riegelelement 21 vorgesehen. Das Riegelelement 21 ist dabei im eingesteckten Zustand ringförmig zwischen dem ersten Kupplungsteil 5 und dem zweiten Kupplungsteil 6 angeordnet. Die Verbindung zwischen den Kupplungsteilen 5, 6 ist dadurch realisiert, dass das Riegelelement 21 in eingestecktem Zustand, einerseits in einer Außennut 22 der Außenkontur 19 des ersten Kupplungsteils eingreift und andererseits in eine zur Außennut radial fluchtende Innennut 23 der Innenkontur 20 des zweiten Kupplungsteils 6 eingreift, die im Befestigungsabschnitt B angeordnet sind. Zudem ist das Riegelelement 21 federnd ausgebildet und kann bereits vormontiert auf dem ersten Kupplungsteil angeordnet sein, womit es beim Einschieben des ersten Kupplungsteils 5 in das zweite Kupplungsteil 6 über die Außenkontur 19 des ersten Kupplungsteils 5 gleitet und anschließend in die Außennut 22 eingreift. Das zweite Kupplungsteil 6 weist zusätzlich eine Öffnung 24 auf, in die das Riegelelement 21 eingeführt bzw. ausgeführt werden kann. Das heiß also, dass das Riegelelement 21 durch die Öffnung herausgezogen werden kann, um die Verbindung der beiden Kupplungsteile 5, 6 zu lösen.

Um eine fluidische Dichtigkeit zwischen den Kupplungsteilen 5, 6 zu gewährleisten ist zudem, wie in Fig. 3 gezeigt, ein als ein O-Ring ausgebildetes Dichtungselement 25 im Überdeckungsabschnitt A radial zwischen den Kupplungsteilen 5, 6 angeordnet und verläuft über den gesamten Umfang des ersten und somit inneren Kupplungsteils 5. Das Dichtungselement 25 ist dabei in eine Aussparung 26' der Innenkontur 20 des zweiten Kupplungsteils 6 und in eine zugehörige Aussparung 26" der Außenkontur 19 des ersten Kupplungsteils 5 angeordnet.

Um die Strömung des Fluids zu steuern, weist das als Stutzen 9 ausgebildete erste Kupplungsteil 5 in seinem Inneren ein als eine Drosselklappe 27 ausgebildetes Steuerelement 28 auf. Die Drosselklappe 27 ist nun derart im ersten Kupplungsteil 5 angeordnet, dass sie die Strömung des Fluids bei einer entsprechenden Stellung regeln kann. Hierzu weist die Drosselplatte 28 eine zur Innenkontur 29 des ersten Kupplungsteils 5 komplementäre Form auf, wobei die Drosselklappe 27 drehbar um eine die Mittelachse 8 schneidende Achse in dem ersten Kupplungsteil 5 angeordnet ist.

Es versteht sich, dass die erfindungsrelevanten Eigenschaft des ersten Kupplungsteils 5 und des ersten Bauteils 2 entsprechend auf das zweite Kupplungsteil 6 und das zweite Bauteil 3 und umgekehrt übertragbar sind, ohne den Umfang dieser Erfindung zu verlassen.

## Patentansprüche

1. Anordnung (1) zur fluidischen und mechanischen Verbindung von zwei Bauteilen (2, 3) in einem Fahrzeug mittels einer Kupplung (4), wobei
- die Kupplung (4) ein erstes Kupplungsteil (5) aufweist, das am ersten Bauteil (2) angeordnet ist,
- die Kupplung (4) ein zweites Kupplungsteil (6) aufweist,
- ein Dämpfungsteil (7) vorgesehen ist, welches das zweite Kupplungsteil (6) beweglich mit dem zweiten Bauteil (3) verbindet,
- zwischen dem Dämpfungsteil (7) und dem zweiten Kupplungsteil (6) ein axialer Überdeckungsbereich (X) gebildet ist, der axial auf der dem ersten Bauteil (2) zugewandten Seite von einem Verbindungsbereich (Y) begrenzt ist, in dem die mechanische Verbindung zwischen dem zweiten Kupplungsteil (6) und dem Dämpfungsteil (7) realisiert ist,
**dadurch gekennzeichnet,**
- **dass** das zweite Kupplungsteil (6) mit dem ersten Kupplungsteil (5) zum fluidischen und mechanischen Verbinden koaxial gesteckt ist, wobei zumindest ein Dichtungselement (25) radial zwischen dem ersten Kupplungsteil (5) und dem zweiten Kupplungsteil (6) angeordnet ist,
- **dass** die Verbindung zwischen dem ersten Kupplungsteil (5) und dem zweiten Kupplungsteil (6) durch ein ringförmiges Riegelelement (21) verriegelt ist, das radial zwischen den Kupplungsteilen (5, 6) angeordnet ist und einerseits in eine Innennut (23) des einen Kupplungsteils (6) und andererseits in eine Außennut (22) des anderen Kupplungsteils (5) eingreift.

2. Anordnung nach Anspruch 1,
**dadurch gekennzeichnet,**
**dass** das Dämpfungsteil (7) als ein Faltenbalg (10) ausgebildet ist.

3. Anordnung nach Anspruch 1 oder 2,
**dadurch gekennzeichnet,**
**dass** das zweite Kupplungsteil (6) mit einem dem zweiten Bauteil (3) zugewandten Endabschnitt (11) freistehend in das zweite Bauteil (3) hineinragt.

4. Anordnung nach Anspruch 3,
**dadurch gekennzeichnet,**
**dass** der Endabschnitt (11) des zweiten Kupplungsteils (6) radial vom zweiten Bauteil (3) beabstandet ist.

5. Anordnung nach einem der Ansprüche 1 bis 4,
**dadurch gekennzeichnet,**
**dass** das erste Kupplungsteil (5) oder das zweite Kupplungsteil (6), insbesondere der Endabschnitt (11), tulpenartig ausgebildet ist.

6. Anordnung nach einem der Ansprüche 1 bis 5,
**dadurch gekennzeichnet,**
**dass** zumindest eines der Kupplungsteile (5, 6) in seinem Inneren ein Steuerelement (28), insbesondere eine Drosselklappe (27), aufweist.

7. Anordnung nach einem der Ansprüche 1 bis 6,
**dadurch gekennzeichnet,**
**dass** das Riegelelement (21) durch eine radiale Öffnung des außenliegenden Kupplungsteils (6) in die Innennut (23) einführbar und daraus ausführbar ist.

8. Anordnung nach einem der Ansprüche 1 bis 7,
**dadurch gekennzeichnet,**
**dass** das Dämpfungsteil (7) das zweite Kupplungsteil (6) konzentrisch umschließt.

9. Anordnung nach einem der Ansprüche 1 bis 8,
**dadurch gekennzeichnet,**
**dass** das Dämpfungsteil (7) mittels einer Schelle (16) mit dem zweiten Bauteil (3) verbunden ist.

10. Anordnung nach einem der Ansprüche 1 bis 9,
**dadurch gekennzeichnet,**
- **dass** das zweite Kupplungsteil (6) und das Dämpfungsteil (7) einstückig ausgebildet sind, oder
- **dass** das zweite Bauteil (3) und das Dämpfungsteil (7) einstückig ausgebildet sind.

11. Kupplung (4) für eine Anordnung (1) nach einem der Ansprüche 1 bis 10.

## Claims

1. An arrangement (1) for the fluidic and mechanical connection of two components (2, 3) in a vehicle by means of a coupling (4),wherein
- the coupling (4) comprises a first coupling part (5), which is arranged on the first component (2),
- the coupling (4) comprises a second coupling part (6),
- a damping part (7) is provided, which moveably connects the second coupling part (6) to the second component (3),
- between the damping part (7) and the second coupling part (6) an axial overlap region (X) is formed, which axially on the side facing the first component (2) is bounded by a connecting region (Y), in which the mechanical connection between the second coupling part (6) and the damping part (7) is realised,
**characterized in that**
- the second coupling part (6) is coaxially plugged with the first coupling part (5) for the fluidic and mechanical connection, wherein at least one sealing element (25) is radially arranged between the first coupling part (5) and the second coupling part (6),
- the connection between the first coupling part (5) and the second coupling part (6) is locked by means of a ring-shaped locking element (21), which is radially arranged between the coupling parts (5, 6) and on the one hand engages in an inner groove (23) of the one coupling part (6) and on the other hand in an outer groove (22) of the other coupling part (5).

2. The arrangement according to Claim 1, **characterized in that** the damping part (7) is formed as a bellows (10).

3. The arrangement according to Claim 1 or 2, **characterized in that** the second coupling part (6) projects into the second component (3) with an end portion (11) facing the second component (3) in a free-standing manner.

4. The arrangement according to Claim 3, **characterized in that** the end portion (11) of the second coupling part (6) is radially spaced from the second component (3).

5. The arrangement according to any one of the Claims 1 to 4, **characterized in that** the first coupling part (5) or the second coupling part (6), in particular the end portion (11), is formed tulip-like.

6. The arrangement according to any one of the Claims 1 to 5, **characterized in that** at least one of the coupling parts (5, 6) comprises a control element (28), in particular a throttle flap (27) in its interior.

7. The arrangement according to any one of the Claims 1 to 6, **characterized in that** the locking element (21) is insertable into the inner groove (23) and extensible thereout through a radial opening of the outer coupling part (6).

8. The arrangement according to any one of the Claims 1 to 7, **characterized in that** the damping part (7) concentrically encloses the second coupling part (6).

9. The arrangement according to any one of the Claims 1 to 8, **characterized in that** the damping part (7) is connected to the second component (3) by means of a clamp (16).

10. The arrangement according to any one of the Claims 1 to 9, **characterized**
- **in that** the second coupling part (6) and the damping part (7) are formed in one piece, or
- **in that** the second component (3) and the damping part (7) are formed in one piece.

11. A coupling (4) for an arrangement (1) according to any one of the Claims 1 to 10.

## Revendications

1. Agencement (1) pour la liaison fluidique et mécanique de deux composants (2, 3) dans un véhicule à l'aide d'un couplage (4),
- le couplage (4) présentant une première partie de couplage (5) qui est agencée sur le premier composant (2),
- le couplage (4) présentant une seconde partie de couplage (6),
- une partie d'amortissement (7) étant prévue, laquelle relie de manière mobile la seconde partie de couplage (6) au second composant (3),
- une zone de recouvrement axiale (X) étant formée entre la partie d'amortissement (7) et la seconde partie de couplage (6), laquelle zone est délimitée axialement sur le côté tourné vers le premier composant (2) par une zone de liaison (Y), dans laquelle est réalisée la liaison mécanique entre la seconde partie de couplage (6) et la partie d'amortissement (7),
**caractérisé en ce que**
- la seconde partie de couplage (6) est enfichée coaxialement avec la première partie de couplage (5) pour la liaison fluidique et mécanique, au moins un élément d'étanchéité (25) étant agencé radialement entre la première partie de couplage (5) et la seconde partie de couplage (6),
- la liaison entre la première partie de couplage (5) et la seconde partie de couplage (6) est verrouillée par un élément de verrou annuaire (21) qui est agencé radialement entre les parties de couplage (5, 6) et s'engage d'une part dans une rainure intérieure (23) de l'une partie de couplage (6) et d'autre part dans une rainure extérieure (22) de l'autre partie de couplage (5).

2. Agencement selon la revendication 1,
**caractérisé en ce que**
la partie d'engagement (7) est réalisée comme un soufflet (10).

3. Agencement selon la revendication 1 ou 2,
**caractérisé en ce que**
la seconde partie de couplage (6) pénètre avec une section d'extrémité (11) tournée vers le second composant (3) librement dans le second composant (3).

4. Agencement selon la revendication 3,
**caractérisé en ce que**
la section d'extrémité (11) de la seconde partie de couplage (6) est espacée radialement du second composant (3).

5. Agencement selon l'une quelconque des revendications 1 à 4,
**caractérisé en ce que**
la première partie de couplage (5) ou la seconde partie de couplage (6), en particulier la section d'extrémité (11) est réalisée en forme de tulipe.

6. Agencement selon l'une quelconque des revendications 1 à 5,
**caractérisé en ce que**
au moins l'une des parties de couplage (5, 6) présente, en son intérieur, un élément de commande (28), en particulier un clapet d'étranglement (27).

7. Agencement selon l'une quelconque des revendications 1 à 6,
**caractérisé en ce que**
l'élément de verrou (21) peut être introduit par une ouverture radiale de la partie de couplage (6) extérieure dans la rainure intérieure (23) et sorti de celle-ci.

8. Agencement selon l'une quelconque des revendications 1 à 7,
**caractérisé en ce que**
la partie d'amortissement (7) entoure concentriquement la seconde partie de couplage (6).

9. Agencement selon l'une quelconque des revendications 1 à 8,
**caractérisé en ce que**
la partie d'amortissement (7) est reliée à l'aide d'un collier (16) au second composant (3).

10. Agencement selon l'une quelconque des revendications 1 à 9,
**caractérisé en ce que**
- la seconde partie de couplage (6) et la partie d'amortissement (7) sont réalisées d'un seul tenant ou
- le second composant (3) et la partie d'amortissement (7) sont réalisés d'un seul tenant.

11. Couplage (4) pour un agencement (1) selon l'une quelconque des revendications 1 à 10.
